# EUROPÄISCHE PATENTSCHRIFT

(11) **EP 2 672 276 B1**
(45) Veröffentlichungstag und Bekanntmachung des Hinweises auf die Patenterteilung: **19.07.2017**
(21) Anmeldenummer: 13169413.5
(22) Anmeldetag: 28.05.2013
(51) Int. Cl.: G01P 3/48, G01P 3/487, G01P 3/50, G01P 3/54, A63G 7/00, A63G 21/04, B60L 15/00, B61L 25/02, G01P 3/66, G01D 5/244, H02K 41/02, G01D 5/20, G01D 5/245, H02P 25/06, H02P 6/182

(54) **Verwendung einer elektromagnetischen Geschwindigkeitsänderungsvorrichtung, wie Linearmotor oder/und Wirbelstrombremse, zur Geschwindigkeitsmessung**
Use of an electromagnetic speed changing device, such as linear motor or/and eddy current retarder, for speed measurement
Utilisation d'un dispositif de modification de la vitesse électromagnétique, tel qu'un moteur linéaire et/ou un frein à courant de Foucault, pour la mesure de la vitesse

(30) Priorität: 04.06.2012 DE 102012209399
(43) Veröffentlichungstag der Anmeldung: 11.12.2013
(73) Patentinhaber: Intrasys GmbH Innovative Transport-Systeme, 80339 München (DE)
(72) Erfinder: Urban, Bernhard, 83539 Pfaffing (DE)
(74) Vertreter: RLTG

(56) Entgegenhaltungen:
- EP-A1- 0 684 480
- EP-A1- 1 985 345
- DE-A1- 10 135 540
- DE-A1-102008 006 305
- DE-A1-102008 040 530
- DE-U1- 20 122 389
- DE-U1- 29 705 615

## Beschreibung

Die vorliegende Erfindung betrifft ein Verfahren zur Ermittlung einer Relativgeschwindigkeit längs einer Relativbewegungsbahn zwischen einem Induktionsteil und einem relativ zu diesem beweglichen Magnetfeldteil einer elektromagnetischen Wirbelstrombremse, insbesondere eines als Wirbelstrombremse verwendeten Linearmotors, mittels dieser Wirbelstrombremse, wobei das Induktionsteil wenigstens einen elektrischen Leiter und das Magnetfeldteil wenigstens eine Magnetanordnung zur Bereitstellung eines von dem Magnetfeldteil ausgehenden Magnetfelds umfasst.

Ebenso betrifft die vorliegende Erfindung eine Vorrichtung zur Ermittlung einer Relativgeschwindigkeit längs einer Relativbewegungsbahn zwischen einem Induktionsteil und einem relativ zu diesem beweglichen Magnetfeldteil einer elektromagnetischen Wirbelstrombremse mittels der Wirbelstrombremse, wobei das Induktionsteil wenigstens einen elektrischen Leiter und das Magnetfeldteil wenigstens eine Magnetanordnung zur Bereitstellung eines von dem Magnetfeldteil ausgehenden Magnetfelds umfasst.

Elektromagnetische Geschwindigkeitsänderungsvorrichtungen im Allgemeinen, die aufgrund von Induktion einer elektrischen Spannung oder/und eines elektrischen Stroms in dem Induktionsteil, welches relativ zu dem Magnetfeldteil als Quelle eines primären Magnetfelds bewegt wird, sind im Stand der Technik sowohl als elektromotorische Antriebe, insbesondere Linearantriebe, als auch als Wirbelstrombremsen zur Beschleunigung und zur Verzögerung von bewegten Objekten bekannt.

Dabei ist üblicherweise ein Teil aus Induktionsteil und Magnetfeldteil an dem bewegten Objekt zur gemeinsamen Bewegung mit diesem vorgesehen, und das jeweils andere Teil ist an der vom bewegten Objekt befahrenen Fahrstrecke vorgesehen, so dass die Relativgeschwindigkeit zwischen den Teilen der Geschwindigkeitsänderungsvorrichtung: Induktionsteil und Magnetfeldteil, im Wesentlichen identisch ist mit der Relativgeschwindigkeit des bewegten Objekts relativ zu seiner Fahrstrecke. Dies gilt auch für die vorliegende Erfindung.

Ein bevorzugtes Anwendungsgebiet elektromagnetischer Geschwindigkeitsänderungsvorrichtungen des Standes der Technik, wie auch der vorliegenden Erfindung, ist die Verzögerung von Wagen von Volksbelustigungsvorrichtungen relativ zu ihrer Strecke, also etwa von Wagen von Achterbahnen, Wasserbahnen, Geisterbahnen, Falltürmen, Karussels und dergleichen.

Dann, wenn Objekte durch elektromagnetische Geschwindigkeitsänderungsvorrichtungen verzögert werden, ist in der Regel die Kenntnis der Objektgeschwindigkeit hilfreich, etwa um einen Verzögerungsvorgang rechtzeitig abzubrechen oder rechtzeitig einzuleiten.

Als nächstkommender Stand der Technik wird die EP 1 985 345 A1 angesehen. Diese lehrt, ein mit einem Permanentmagneten eines Linearmotors versehenes Fahrzeug eines Fahrgeschäfts mit über Frequenzumrichter angesteuerte Linearstatoren zu beschleunigen bzw. zu verzögern.

Um eine Relativgeschwindigkeit des Fahrzeugs zu den streckenfesten Linearstatoren zu ermitteln, lehrt die EP 1 985 345 A1, einen Messmotor mit gleicher Phasenanzahl wie die Linearstatoren zu diesen parallel zu schalten. Anhand der am Messmotor gemessenen Drehzahl soll dann auf die Relativgeschwindigkeit des Fahrzeugs zurückgeschlossen werden.

Die EP 1 985 345 A1 offenbart weiter den zur Ansteuerung der Linearstatoren verwendeten Frequenzumrichter abhängig vom Erfassungsergebnis des Drehzahlmotors mit den Versorgungsleitungen der Linearstatoren zu verbinden bzw. von diesen zu trennen. Eine vom Messergebnis des Messmotors abhängige Beschleunigung oder Verzögerung des Fahrzeugs erfolgt dabei ausschließlich aktiv durch Erzeugen eines wandernden Magnetfelds an den Linearstatoren, welches eine Kraftrückwirkung auf den fahrzeugfesten Permanentmagneten hat.

Aus der DE 10 2008 006 305 A1 ist bekannt, einer relativ zu einer Strecke bewegten Magnetfeldleiste mit alternierend polarisierten Permanentmagneten mehrere Gruppen von Magnetfeldsensoren derart gegenüber zu stellen, dass Magnetfeldsensoren einer Gruppe stets gleich polarisierte, aber unterschiedliche Permanentmagnete der Magnetfeldleiste gegenüberstehen. Durch eine so genannte "Mehrheitsentscheidung", gemäß welcher dann, wenn einer Mehrheit von Sensoren einer Sensorengruppe ein Magnet gegenüberliegt, von der Sensorengruppe kollektiv ein High-Signal ausgegeben wird, und dann, wenn einer Mehrzahl von Sensoren kein Magnet der betreffenden Polarität gegenüberliegt, ein Low-Signal ausgegeben wird, können Lücken in der Magnetfeldleiste, in welchen Magnete entsprechend der für die Magnetleiste gewählten Polteilung fehlen, signaltechnisch überbrückt und ausgeblendet werden. So können auch aus mehreren Wagen gebildete Züge, in deren Kopplungsbereiche keine Permanentmagnete vorgesehen sind, ohne Signallücken wie eine durchgehend mit Magneten bestückte Magnetleiste erfasst werden. Die DE 10 2008 006 305 A1 deutet am Ende ihrer Offenbarung, ohne weitere Details zu nennen, an, dass anstelle von Magnetfeldsensoren auch die Spulenwicklungen des Primärteils als Magnetfeldsensoren verwendet werden können.

Die Druckschrift DE 201 22 389 U1 offenbart eine Vorrichtung zur Positions- oder/und Geschwindigkeitsmessung eines Synchronmotors mit einem Primärteil mit Antriebsspulen und mit einem Sekundärteil mit regelmäßig angeordneten Magneten. Die in dieser Druckschrift beschriebene Vorrichtung umfasst ein erstes und ein zweites Positionsmesssystem mit voneinander unabhängigen Ausgangssignalen, die von der Positionierung des Primärteils relativ zum Sekundärteil abhängen. Die Ausgangssignale der beiden Positionsmesssysteme werden in unabhängigen Auswerteeinheiten zu Positions- oder/und Geschwindigkeitswerten verarbeitet. Eine Vergleichseinrichtung vergleicht die von den jeweiligen Messsystemen gelieferten Positions- oder/und Geschwindigkeitswerte und stellt eine korrekte Erfassung von Position oder/und Geschwindigkeit des Primärteils relativ zum Sekundärteil sicher, wobei das Ausgangssignal eines der beiden Positionsmesssysteme durch eine Abtastung von regelmäßig angeordneten Magneten entsteht. Dieses Ausgangssignal kann durch die in einer Antriebsspule induzierte Spannung gebildet sein. Die DE 201 22 389 U1 regt weiter an, dass durch die sichere Erfassung der Relativgeschwindigkeit zwischen Primärteil und Sekundärteil eine Einhaltung einer vorgegebenen Maximalgeschwindigkeit des Primärteils relativ zum Sekundärteil überwacht werden kann.

Die Druckschrift DE 101 35 540 A1 offenbart eine Vorrichtung und ein Verfahren zum Ermitteln der Position eines ersten Motorteils eines Elektromotors in Bezug auf einen zweiten Motorteil, welcher ein stationäres Magnetfeld aufweist. Hierzu lehrt die DE 101 35 540 A1, lokal die Magnetfeldstärke des zweiten Motorteils zu ermitteln und daraus die Position des ersten Motorteils abzuleiten. Dabei erfolgt die Geschwindigkeitsermittlung abhängig von der Geschwindigkeit selbst, d. h. niedrige Geschwindigkeiten werden anders ermittelt als hohe Geschwindigkeiten.

Die DE 101 35 540 A1 lehrt hierzu, Magnetfeldsensoren zur lokalen Ermittlung der Magnetfeldstärke im Bereich der Spulen des ersten Motorteils anzuordnen. Eine Verwendung der Antriebsspulen selbst als Magnetfeldsensor nennt die DE 101 35 540 A1 nicht. Die Verwendung gesonderter Magnetfeldsensoren stellt nämlich sicher, dass die Relativposition des ersten Motorteils zum zweiten Motorteil auch und gerade im Antriebsbetrieb des Elektromotors, also unabhängig von der Bestromungssituation der Antriebsspulen, ermittelbar ist.

Die Druckschrift DE 297 05 615 U1 lehrt, zur Erfassung einer Position oder/und einer Geschwindigkeit eines längs einer Bahn bewegbaren Körpers digitale Sensoren zu verwenden, um das von den Sensoren gelieferte Signal unempfindlich gegenüber Änderungen des Abstands zwischen Sensoren und von diesen erfassten Reaktionsteilen zu machen. Es werden zwei Reihen von Magnetfeldsensoren verwendet, von welchen die erste Reihe nordpolsensitive Sensoren aufweist und die zweite Reihe südpolsensitive Sensoren aufweist. Die Sensoren erfassen eine im Falle eines Überfahrens über sie hinweg gehende Magnetfeldleiste eines Linearmotors. Die Ersetzung der in der DE 297 05 615 U1 beschriebenen digitalen Sensoren durch Statorspulen eines Linearmotors kommt nicht in Betracht, da die Spulen ohne weitere Maßnahmen lediglich als analoge Sensoren einsetzbar sind.

Die DE 10 2008 040 530 A1 offenbart, an einem von zwei relativ zueinander beweglichen Teilen der Maschine einen Magnetfeldsensor zu befestigen und mit diesem ein von dem jeweils anderen Teil ausgehendes Magnetfeld zu erfassen und ausgehend von der Erfassung des Magnetfelds in einer Auswertevorrichtung eine geschwindigkeitsabhängige Größe der Relativbewegung zwischen dem ersten und dem zweiten Maschinenteil zu ermitteln.

Die Druckschrift EP 0 684 480 A1 offenbart ein Verfahren und eine Vorrichtung zur Erfassung einer Drehzahl mit Hilfe eines Polrades, wobei die dort beschiebenen Verfahren und Vorrichtung unempfindlich gegenüber Fertigungsfehlern am Polrad sein sollen.

Bei manchen elektromagnetisch verzögerten Fahrzeugen des Standes der Technik, insbesondere an Volksbelustigungsvorrichtungen, wird die Relativgeschwindigkeit eines Fahrzeugs relativ zur Strecke beispielsweise mit Näherungsschaltern und mit mit diesen zusammenwirkenden langen Erfassungsteilen ermittelt, wobei die Näherungsschalter nur punktuell vorgesehen werden können, was zu einem geringen Auflösungsvermögen und nur zu einer lokal sehr begrenzten Erfassung der Fahrzeug-Relativgeschwindigkeit führt.

Alternativ ist es möglich, die Relativgeschwindigkeit elektromechanisch zu erfassen, etwa durch Messung der Drehzahl von Fahrzeugrollen oder -reifen. Dabei besteht jedoch häufig das Problem, die zunächst unmittelbar nur im Fahrzeug vorhandene Geschwindigkeitsinformation dann, wenn das Fahrzeug wie bei den meisten Volksbelustigungsvorrichtungen führerlos ist, vom Fahrzeug zu einem außerhalb des Fahrzeugs gelegenen Steuerstand desselben zu übertragen. Außerdem kann hier möglicherweise auftretender Schlupf zu ungenauen Erfassungen der Fahrzeuggeschwindigkeit führen.

Es ist daher die Aufgabe der vorliegenden Erfindung, ausgehend von der EP 1 985 345 A1 eine technische Lehre zur Ermittlung einer Relativgeschwindigkeit zwischen zwei relativ zueinander beweglichen Teilen einer elektromagnetischen Wirbelstrombremse bereitzustellen, welche konstruktiv einfacher als die bekannte Lehre gestattet, die Relativgeschwindigkeit der Wirbelstrombremsteile zu erfassen und die Wirbelstrombremse abhängig von der erfassten Relativgeschwindigkeit zu betreiben, um mit der zur Relativgeschwindigkeitsermittlung verwendeten Wirbelstrombremse selbst die erfasste Relativgeschwindigkeit zu verändern.

Diese Aufgabe wird erfindungsgemäß gelöst durch ein Verfahren mit allen Merkmalen des Anspruchs 1.

Gemäß einem weiteren, mit dem zuvor genannten durch eine gemeinsame erfinderische Idee verbundenen Gesichtspunkt der vorliegenden Erfindung wird diese Aufgabe auch gelöst durch eine Vorrichtung mit allen Merkmalen des Anspruchs 3.

Wenn nachfolgend von einer Geschwindigkeitsänderungsvorrichtung die Rede ist, so bezeichnet dies, sofern im Einzelfall nichts Abweichendes ausgesagt ist, nur eine Wirbelstrombremse, insbesondere einen als Wirbelstrombremse verwendeten Linearmotor.

Die nachfolgende Darstellung der vorliegenden Erfindung soll die Lösung der der vorliegenden Erfindung zugrundeliegenden objektiven technischen Aufgabe sowohl durch das Verfahren, wie auch durch die Vorrichtung, näher erläutern:
Dann, wenn sich das Induktionsteil aufgrund der Relativbewegung von Induktionsteil und Magnetfeldteil längs der Relativbewegungsbahn relativ zum Magnetfeldteil durch dessen Magnetfeld bewegt, wird nach den allgemein bekannten Prinzipien der elektromagnetischen Induktion aufgrund der zeitlichen Änderung des auf das Induktionsteil einwirkenden Magnetfelds in dem Induktionsteil eine elektrische Spannung bzw. ein elektrischer Strom induziert. Im Falle eines induzierten Stroms erzeugt dieser selbst wiederum ein magnetisches Feld, welches dem ihn erzeugenden Magnetfeld des Magnetfeldteils entgegen gerichtet ist und somit eine die Relativbewegung von Induktionsteil und Magnetfeldteil verzögernde Wirkung ausübt.

Dabei taucht der elektrische Leiter des Induktionsteils zunächst in das Magnetfeld des Magnetfeldteils ein, befindet sich dann vollständig oder wenigstens maximal in diesem und verlässt schließlich das Magnetfeld wieder. Durch diese unterschiedlich starke Beeinflussung des wenigstens einen elektrischen Leiters im Induktionsteil durch das vom Magnetfeldteil ausgehenden Magnetfeld kommt es zu einer sich zeitlich ändernden Intensität der Induktion in Induktionsteil, wobei die zeitliche Änderung der Intensität der Induktion im Induktionsteil u. a. abhängig ist von dem konstruktiven Aufbau der wenigstens einen Magnetanordnung des Magnetfelds und von der Relativgeschwindigkeit zwischen Magnetfeldteil und Induktionsteil. Der konstruktive Aufbau des Magnetfeldteils, genauer von dessen wenigstens einer Magnetanordnung, liefert dabei eine für die Erfassung der Relativgeschwindigkeit notwendige Weginformation, während die Relativgeschwindigkeit selbst durch die von ihr bestimmte Dauer der Beeinflussung des wenigstens einen Leiters des Induktionsteils durch das Magnetfeldteil die ebenfalls notwendige Zeitinformation liefert.

Erfindungsgemäß ist vorgesehen, zum einen während der Induktion die im Induktionsteil induzierte elektrische Größe über eine Zeitdauer hinweg zu erfassen und unter Berücksichtigung der konstruktiven relevanten Abmessungen des Magnetfeldteils zur Erfassung einer Geschwindigkeitsinformation zu nutzen. Die Zeitdauer muss so gewählt sein, dass zwei charakteristische Stellen bzw. Werte der elektrischen Größe erfasst werden.

Hierzu ist erfindungsgemäß genauer vorgesehen, aus der erfassten elektrischen Größe wenigstens zwei charakteristische Stellen oder Werte auszuwählen und der zwischen dem Auftreten dieser Stellen zurückgelegten Distanz eine durch die grundsätzlich bekannte Konstruktion des Magnetfeldteils ebenfalls bekannte Abmessung desselben längs der Relativbewegungsbahn zuzuordnen.

Dies können in einem besonders einfachen, wenngleich wenig realitätsnahen Fall mit nur einer einzigen Magnetanordnung am Magnetfeldteil jene charakteristischen Stellen bzw. Werte sein, bei denen der Wert der erfassten elektrischen Größe seine Nulllinie verlässt und zu dieser zurückkehrt, also der Induktionsbeginn und das Induktionsende.

Da der Induktionsbeginn mit dem Eintreten des Induktionsteils, oder seines wenigstens einen elektrischen Leiters, in das Magnetfeld beginnt und mit dem Austreten desselben aus dem Magnetfeld endet, kann diesen charakteristischen Stellen bzw. Werten die Länge der Magnetanordnung längs der Relativbewegungsbahn als die oben genannte auf die Magnetanordnung bezogene Abmessung zugeordnet werden.

Da die induzierte elektrische Größe während der Induktion und somit mit ihrer zeitlichen Änderung erfasst wird, ist die Bestimmung des zeitlichen Abstands zwischen diesen charakteristischen Stellen unproblematisch.

Beispielsweise kann die elektrische Größe in ihrem zeitlichen Verlauf erfasst werden, also als Wertepaare aus dem Wert der elektrischen Größe und der zugeordneten Zeit, zu welcher der jeweilige Wert erfasst wird. Derartige Wertepaare können kontinuierlich oder quasi-kontinuierlich im Erfassungstakt einer zur Erfassung der elektrischen Größe eingesetzten Erfassungssteuerung erfasst und gespeichert werden. Als Erfassungssteuerung kann beispielsweise eine speicherprogrammierbare Steuerung (SPS) oder allgemein ein elektronischer Rechner eingesetzt werden. Mit diesem Vorgehen steht einer Steuerung der elektromagnetischen Geschwindigkeitsänderungsvorrichtung der zeitliche Verlauf der elektrischen Größe über den Erfassungszeitraum zur Verfügung. Aus diesem können dann charakteristische Stellen zur weiteren Datenverarbeitung ausgewählt werden.

Jedoch bedarf es einer Speicherung von derartigen Wertepaaren in einer einfachen und daher bevorzugten Ausführungsform der vorliegenden Erfindung nicht. Die Erfassungssteuerung als Teil der oben genannten elektrischen Schaltung kann einfach und ressourcenschonend dazu ausgebildet sein, die elektrische Größe über einen Zeitraum zu erfassen und dann, wenn diese während eines Induktionsvorgangs einen charakteristischen Wert annimmt, etwa den Wert "Null", einen Zeitstempel setzen, also die Zeit des Auftretens des charakteristischen Werts speichern. Auch dies ist ein Erfassen der elektrischen Größe und ein Auswählen von charakteristischen Werten derselben im Sinne der vorliegenden Anmeldung.

Mit Bekanntsein des zeitlichen Abstands und der Länge der Magnetanordnung kann die Relativgeschwindigkeit zwischen Magnetfeldteil und Induktionsteil ohne weiteres bestimmt werden, denn die Länge der Magnetanordnung muss in der zwischen dem Auftreten der charakteristischen Stellen abgelaufenen Zeit durchfahren worden sein.

Ebenso sind Abwandlungen hiervon möglich: so liegt in der Regel bei der üblichen regelmäßigen, etwa quaderförmigen, Gestalt der verwendeten wenigstens einen Magnetanordnung zwischen den beschriebenen Nullstellen ein Induktionsextremwert. Auch dieser kann erfasst und als charakteristische Stelle bzw. Wert ausgewählt werden. Die Distanz, die das oben beschriebene Magnetfeldteil mit nur einer Magnetanordnung zwischen Anfangsnullstelle und dem Induktionsextremwert bzw. zwischen dem Induktionsextremwert und der Endnullstelle relativ zum Induktionsteil zurücklegt, beträgt dann eine halbe Abmessung der Magnetanordnung in Richtung der Relativbewegungsbahn.

Dann, wenn das Magnetfeldteil in Verlaufsrichtung der Relativbewegungsbahn mehrere Magnetanordnungen mit alternierender Polarität hintereinander angeordnet aufweist, können gemäß einem weiteren Anwendungsbeispiel dieselben charakteristischen Stellen bzw. Werte wie zuvor, also Nullstellen und lokale Extremwerte, herangezogen werden. Denn dann, wenn das Induktionsteil das mit mehreren Magnetanordnungen versehene Magnetfeldteil durchfährt, treten unweigerlich lokale Extremstellen der induzierten elektrischen Größe auf.

Wählt man also zwei zeitlich unmittelbar aufeinanderfolgende lokale Extremwerte oder Nullstellen der elektrischen Größe als die oben bezeichneten charakteristischen Stellen aus, so ist klar, dass die zeitlich an ein und demselben elektrischen Leiter im Induktionsteil auftretenden lokalen Extremwerte durch räumlich unmittelbar hintereinandergelegene Magnetanordnungen bewirkt worden sein müssen. Ähnliches gilt für unmittelbar hintereinander auftretende Nullstellen. Diese müssen durch unmittelbar hintereinander gelegene Übergänge zwischen zwei aufeinander folgenden Magnetanordnungen unterschiedlicher Polarität bewirkt worden sein.

Wiederum ist die Bestimmung des zeitlichen Abstands zwischen den lokalen Extremwerten oder Nullstellen der während einer Zeitdauer erfassten elektrischen Größe unproblematisch und kann gemäß den oben beschriebenen Vorgehensweisen erfolgen.

Da die lokalen Extremwerte oder Nullstellen, wie oben dargelegt, durch unmittelbar aufeinanderfolgende Magnetanordnungen bewirkt wurden, hat das Magnetfeldteil in der zwischen dem Auftreten aufeinander unmittelbar folgender lokaler Extremwerte oder aufeinander unmittelbar folgender Nullstellen verstrichenen Zeit den längs der Relativbewegungsbahn verlaufenden Anteil des Polteilungsabstands zwischen den hier beachtlichen Magnetanordnungen relativ zum Induktionsteil zurückgelegt. Dies ist in der Regel der Polteilungsabstand selbst. Hieraus ist die Relativgeschwindigkeit zwischen Magnetfeldteil und Induktionsteil ohne Weiteres durch Division von Weginformation und Zeitinformation bestimmbar.

Dabei ist dem Fachmann ohne Weiteres klar, dass er nicht notwendigerweise unmittelbar aufeinanderfolgende lokale Extremwerte oder Nullstellen heranziehen muss, sondern er kann vielmehr den m-ten lokalen Extremwert und den n-ten lokalen Extremwert bzw. die m-te Nullstelle und die n-te Nullstelle heranziehen, wobei gilt: (n - m) ≥ 1. Er hat dann lediglich das (n - m)-fache des Polteilungsabstands als zurückgelegte Distanz den ausgewählten charakteristischen Stellen bzw. Werten zuzuordnen. So wird eine über das jeweilige Vielfache des Polteilungsabstands gemittelte Relativgeschwindigkeit erhalten.

Dann, wenn das Magnetfeldteil, wie in der Realität üblich, eine Mehrzahl von längs der Relativbewegungsbahn hintereinander angeordneten Magnetanordnungen mit alternierender Polarität aufweist, wird der zeitliche Verlauf der induzierten elektrischen Größe in der Regel mehrere Peaks aufweisen, wobei jeder Peak einer anderen Magnetanordnung zuzuordnen ist. Dies ist eine der in der Realität auftretenden Möglichkeiten, eine Magnetanordnung oder einen Ort am Magnetfeldteil zu identifizieren, welche bzw. welcher das Auftreten einer charakteristischen Stelle oder eines charakteristischen Werts der induzierten elektrischen Größe bewirkt.

In der Speichervorrichtung der erfindungsgemäßen Vorrichtung können die notwendigen Abmessungsdaten des Magnetfeldteils als Weginformation hinterlegt sein. Weiterhin kann die Speichervorrichtung dazu verwendet werden, Betriebsdaten bei der Ausführung des oben beschriebenen Verfahrens zu speichern, wie etwa einen zeitlichen Verlauf der induzierten elektrischen Größe, die den ausgewählten charakteristischen Stellen oder Werten zugeordneten Zeitstempel, den bestimmten zeitlichen Abstand zwischen diesen, usw.

Nachfolgend werden die vorliegende Erfindung und vorteilhafte Weiterbildungen der vorliegenden Erfindung beschrieben werden. Sofern diese beispielhaft als Weiterbildung des Verfahrens beschrieben sind, wird der Fachmann ohne Weiteres verstehen, dass die erfindungsgemäße Vorrichtung zur Ausführung der Weiterbildung des Verfahrens ausgebildet sein kann und umgekehrt.

Erfindungsgemäß ist die elektromagnetische Geschwindigkeitsänderungsvorrichtung ein- und ausschaltbar. Dies bedeutet, dass die Wirkung einer Verzögerung gezielt durch Betätigen eines oder mehrerer Schalter einschaltbar bzw. ausschaltbar ist.

Somit kann durch wenigstens einen Schalter ein unter Beteiligung des elektrischen Leiters des Induktionsteils gebildeter Stromkreis unterbrochen sein oder geschlossen sein.

Bei einer Wirbelstrombremse wird nur dann Bremswirkung erzielt, wenn der Stromkreis, an dem der elektrische Leiter des Induktionsteils beteiligt ist, geschlossen ist.

Dennoch kann unabhängig von der Stellung des den Stromkreis des wenigstens einen Leiter des Induktionsteils möglicherweise unterbrechenden Schalters eine Geschwindigkeitserfassung stattfinden. Dann nämlich, wenn ein derartiger Schalter geöffnet, also der wenigstens eine elektrische Leiter des Induktionsteils unterbrochen ist, kann in vorteilhafter Weise als die elektrische Größe die in dem Induktionsteil bzw. in seinem wenigstens einen elektrischen Leiter induzierte Spannung erfasst werden.

Dann hingegen, wenn die Geschwindigkeitsänderungsvorrichtung für einen Betrieb hergerichtet und etwaige Schalter am wenigstens einen elektrischen Leiter des Induktionsteils geschlossen sind, ist es einfacher, wenn der induzierte Strom als die elektrische Größe erfasst wird. Gleichwohl kann auch in diesem Falle die induzierte Spannung erfasst werden, etwa als Spannungsabfall an einem im beteiligten Stromkreis angeordneten Widerstand, jedoch ist dies wegen der zusätzlich notwendigen Schaltelemente (Widerstand) nicht bevorzugt.

Vorzugsweise ist daher die erfindungsgemäße Vorrichtung dazu ausgebildet, die elektrische Spannung in dem wenigstens einen Leiter des Induktionsteils zu erfassen oder/und ist dazu ausgebildet, den darin fließenden induzierten Strom zu erfassen.

Für eine möglichst exakte Erfassung der Relativgeschwindigkeit der beiden Teile der Geschwindigkeitsänderungsvorrichtung hat es sich als vorteilhaft erwiesen, die elektrische Größe, die stets von einem Ausgangsniveau betragsmäßig ansteigt und wieder auf ihr Ausgangsniveau zurückfällt, in ein Rechtecksignal umzuwandeln. Dementsprechend kann die elektrische Schaltung der erfindungsgemäßen Vorrichtung zur Umwandlung der erfassten elektrischen Größe in ein Rechtecksignal ausgebildet sein.

Ein durch Umwandlung eines Rohsignals erhaltenes Rechtecksignal, welches im Sinne der vorliegenden Anmeldung ebenfalls als erfasste induzierte elektrische Größe anzusehen ist, weist im Wesentlichen zwei vertikale Flanken und ein zwischen diesen liegendes im Wesentlichen konstantes Signalniveau auf, welches von dem Niveau des Signals jenseits der Flanken verschieden ist.

Gerade die nahezu oder tatsächlich vertikalen Flanken des Rechtecksignals lassen eine sehr exakte Bestimmung des zeitlichen Abstands zwischen zwei Flanken zu, was die Verarbeitung des Signals durch eine speicherprogrammierbare Steuerung erleichtert. Deshalb ist es bevorzugt, aufsteigende oder/und abfallende Flanken bzw. mit diesen gleichzusetzende Nulldurchgänge des Rechtecksignals als charakteristische Stellen bzw. Werte auszuwählen.

Ein Rechtecksignal stellt ein High-Low-Pegelsignal dar, das besonders vorteilhaft von speicherprogrammierbaren Steuerungen (SPS) verarbeitet werden kann. Hierzu kann in einen Eingang der SPS das Rechtecksignal eingegeben werden. Ein Wechsel des Signalpegels von "High" nach "Low" oder/und umgekehrt kann dabei unmittelbar als Auslöser zum Setzen eines Zeitstempels (Speichern der dem Pegelwechsel zugeordeten Zeitinformation) verwendet werden. Auch diese Nutzung des Pegelwechsels des Rechtecksignals ist ein Auswählen von charakteristischen Stellen bzw. Werten der erfassten elektrischen Größe im Sinne der vorliegenden Anmeldung.

Eine besonders große Effektivität der Geschwindigkeitsänderungsvorrichtung wird dadurch erhalten, dass das Magnetfeldteil längs der Relativbewegungsbahn eine Mehrzahl von aufeinander folgenden Magnetanordnungen mit jeweils entgegengesetzter Polaritätsanordnung aufweist. Durch die in Relativbewegungsrichtung alternierende Polaritätsanordnung wird bei einer Bewegung des Induktionsteils durch das Magnetfeld des Magnetfeldteils eine maximale zeitliche Änderung des Magnetfelds erreicht, was für eine betragsmäßig maximale Induktion sorgt.

Alternierende Polaritäten von Magnetfeldabschnitten des Magnetfelds des Magnetfeldteils sorgen für eine um einen Mittelwert oszillierende zu erfassende elektrische Größe. Dieser Mittelwert ist bei einer Wirbelstrombremse Null. Dabei legt das Magnetfeldteil relativ zum Induktionsteil stets in einer halben Oszillationsperiode einen Polteilungsabstand zurück bzw. legt in einer Oszillationsperiode den doppelten Polteilungsabstand zurück.

In diesem Falle alternierender Polaritäten ist es vorteilhaft, gleichartige charakteristische Stellen bzw. Werte auszuwählen, um daraus die Relativgeschwindigkeit zu bestimmen. Im Falle der oben bevorzugten Verwendung eines aus der erfassten elektrischen Größe abgeleiteten Rechtecksignals bedeutet dies, dass vorteilhaft gleichartige Flanken als charakteristische Stellen aus dem Rechtecksignal ausgewählt werden können. Dies können bevorzugt nur steigende Flanken oder ebenso nur fallende Flanken sein.

Aufgrund der alternierenden Polarität wird dabei vorteilhaft ein sehr "sauberes" Signal der erfassten elektrischen Größe erhalten, also ein zeitlicher Verlauf mit einem vorteilhaft hohen Signal-Rausch-Verhältnis. Flanken des Rechtecksignals sind dabei von anderen Flanken um den Polteilungsabstand oder ein ganzzahliges Vielfaches desselben beabstandet, wobei die Anzahl an Polteilungsabständen der Anzahl an Signalhalbperioden zwischen zwei als charakteristische Stellen oder Werte ausgewählten Flanken entspricht.

Weiter kann die erfindungsgemäße Vorrichtung, insbesondere dann, wenn das Magnetfeldteil eine Mehrzahl von Magnetanordnungen mit abwechselnder Polarität in Relativbewegungsrichtung hintereinander angeordnet aufweist, unter Berücksichtigung einer zwischen dem Auftreten von charakteristischen Stellen oder Werten zurückgelegten Abmessung des Magnetfeldteils zur Bestimmung der Relativposition von Magnetfeldteil und Induktionsteil herangezogen werden. Die Abmessung des Magnetfeldteils ist dabei vorteilhaft auf dessen wenigstens eine Magnetanordnung bezogen. Hierzu kann die Schaltung dazu ausgebildet sein, die auftretenden charakteristischen Stellen oder Werte zu zählen. Beispielsweise können die nacheinander auftretenden Flanken des Rechtecksignals gezählt werden. Jeder Flanke kann somit eine Zählungszahl zugeordnet werden. Da, wie oben erläutert, das Magnetfeldteil in diesem Beispiel zwischen zwei aufeinander folgend auftretenden Flanken jeweils einen Polteilungsabstand relativ zum Induktionsteil zurücklegt, kann ab dem Induktionsbeginn, zu welchem die Relativstellung von Magnetfeldteil und Induktionsteil bekannt ist, die Relativstellung von Magnetfeldteil und Induktionsteil in der Relativbewegungsrichtung anhand der Zählungszahl einer aktuell auftretenden Flanke ermittelt werden.

Dies ermöglicht beispielsweise auch, die elektromagnetische Geschwindigkeitsänderungsvorrichtung abhängig von der Relativstellung von Induktionsteil und Magnetfeldteil ein- bzw. auszuschalten. Dadurch wird das Erreichen einer Relativbewegung mit einem vorbestimmten Ort-Geschwindigkeit-Profil ermöglicht.

Die Flanken des Rechtecksignals sind dabei nur ein vorteilhaftes Beispiel. Selbstverständlich können auch andere charakteristische Stellen, wie beispielsweise Extremwerte und dergleichen, in ihrem Auftreten gezählt werden.

Da die hier diskutierte Vorrichtung häufig mit einer speicherprogrammierbaren Steuerung zusammenwirkt oder an einer solchen realisiert ist, welche die erfasste Größe mit einer vorbestimmten Taktung abtastet, sollen im Sinne der vorliegenden Anmeldung Begriffe, die einen absoluten Wert andeuten, wie etwa "Nullstelle" und dergleichen, nicht als ausschließlich der exakte Wert verstanden werden. Diese sollen vielmehr als beispielsweise durch eine typische Abtasttaktung bewirktes Toleranzband verstanden werden, das den exakten Wert enthält. So wird eine speicherprogrammierbare Steuerung oder ein anderer getakteter elektronischer Rechner beispielsweise einen Pegelwechsel zwischen High und Low des Rechtecksignals in der Regel niemals exakt erfassen, sondern wird bei einer Abtastung feststellen, dass sich der Pegel im Vergleich zur vorhergehenden Abtastung geändert hat. In diesem Falle ist der Pegelwechsel mit der durch die Abtastrate vorgegebenen Genauigkeit erfassbar.

Gemäß der vorliegenden Erfindung ist es vorgesehen, die zur Ermittlung der Relativgeschwindigkeit herangezogene Geschwindigkeitsänderungsvorrichtung in Abhängigkeit von der ermittelten Relativgeschwindigkeit zu betreiben, um eben diese Relativgeschwindigkeit zu ändern. Dementsprechend kann die erfindungsgemäße Vorrichtung eine entsprechende Steuereinrichtung umfassen, wobei der Begriff "Steuereinrichtung" im Sinne der vorliegenden Anmeldung sowohl eine offene Steuerung als auch eine Regeleinrichtung mit einem geschlossenen Regelkreis bezeichnet. Somit ist es möglich, an einer Bremsstrecke mit der zur Verzögerung vorgesehenen Geschwindigkeitsänderungsvorrichtung zunächst die Relativgeschwindigkeit zu ermitteln und abhängig davon die Geschwindigkeitsänderungsvorrichtung zu betreiben, wenn die ermittelte Relativgeschwindigkeit über einem vorbestimmten zur Beurteilung einer erforderlichen Verzögerung bereitgestellten Schwellenwert liegt und daher verringert werden soll.

Ebenso kann vorgesehen sein, dass die Geschwindigkeitsermittlung iterativ vollzogen wird, bis die ermittelte Relativgeschwindigkeit mit einer vorbestimmten Soll-Relativgeschwindigkeit übereinstimmt oder im Rahmen einer vorgegebenen Genauigkeit übereinstimmt.

Ausdruck der hier vorgestellten erfinderischen Idee ist überdies die Verwendung eines als Wirbelstrombremse verwendeten Linearantriebs oder einer Wirbelstrombremse zur Ermittlung einer Relativgeschwindigkeit zwischen relativ zueinander längs einer Relativbewegungsbahn beweglichen Teile des Linearantriebs oder der Wirbelstrombremse. Diese Teile können das oben bezeichnete Magnetfeldteil und das oben bezeichnete Induktionsteil sein.

Bei dieser Verwendung kann insbesondere das oben beschriebene und weitergebildete Verfahren ausgeführt oder/und die oben beschriebene und weitergebildete Vorrichtung verwendet werden.

Bevorzugt wird die erfindungsgemäße Vorrichtung an Volksbelustigungsvorrichtungen eingesetzt und zwar besonders bevorzugt mit einem als Wirbelstrombremse verwendeten Linearmotor als der elektromagnetischen Geschwindigkeitsänderungsvorrichtung, da an diesem nur das Induktionssignal ohne Beeinflussung durch Antriebssignale vorliegt. Diese Volksbelustigungsvorrichtungen können nur an vorbestimmten Streckenabschnitten mit Geschwindigkeitsänderungsvorrichtungen versehen sein. Zwischen diesen können sich die Wagen der Volksbelustigungsvorrichtung im Wesentlichen nur durch Schwerkraft und Reibung beschleunigt bzw. verzögert bewegen.

Ebenso kann durch Anordnung der beiden Teile der Geschwindigkeitsänderungsvorrichtung an einem Fahrzeug, etwa an einem Wagen einer Volksbelustigungsvorrichtung, und an der von dem Fahrzeug befahrenen Strecke, etwa an der Schiene oder sonstigen Bahn der Volksbelustigungsvorrichtung, die Relativgeschwindigkeit zwischen Fahrzeug und Strecke ermittelt werden.

Dabei ist insbesondere die Anordnung des Induktionsteils ortsfest an der Strecke und die Anordnung des Magnetfeldteils zur gemeinsamen Bewegung mit dem Fahrzeug von Vorteil, da zum einen gerade bei der Anwendung der Geschwindigkeitsänderungsvorrichtung als Linearantrieb das Induktionsteil mit elektrischer Energie zu versorgen ist, was bei streckenfesten Induktionsteilen erheblich einfacher ist als bei am Fahrzeug mitgeführten Induktionsteilen. Überdies ist die Signalerfassung, Verarbeitung und Weiterleitung gerade bei führerlosen Fahrzeugen, wie etwa bei Volksbelustigungsvorrichtungen, an streckenfesten Induktionsteilen erheblich erleichtert. Denn die Erfassung der induzierten elektrischen Größe muss systembedingt am Induktionsteil erfolgen, an dem die Induktion stattfindet.

Die Relativgeschwindigkeit zwischen Induktionsteil und Magnetfeldteil ist mittels der elektromagnetischen Wirbelstrombremse, insbesondere einem als Wirbelstrombremse verwendeten Linearmotor, alternativ oder zusätzlich auch mit einem Verfahren mit folgenden Verfahrensschritten möglich:
- Erfassen eines lokalen Extremwerts einer durch das Magnetfeldteil im Induktionsteil aufgrund der Relativbewegung von Induktionsteil und Magnetfeldteil induzierten elektrischen Größe,
- Vergleichen des erfassten lokalen Extremwerts mit einem Kennfeld, in welchem ein Zusammenhang zwischen Relativgeschwindigkeit und Betrag des Extremwerts, insbesondere unter Berücksichtigung des Vorzeichens des Extremwertbetrags, hinterlegt ist, und
- Ermitteln der im Kennfeld dem Erfassten lokalen Extremwert zugeordneten Relativgeschwindigkeit als die Relativgeschwindigkeit zwischen Magnetfeldteil und Induktionsteil.

Da die zeitliche Änderung des auf den Leiter des Induktionsteils einwirkenden Magnetfelds ursächlich für die Induktion einer Spannung oder eines Stroms im Leiter ist, ist bei ansonsten identischem konstruktivem Aufbau der relativ zueinander beweglichen Teile der elektromagnetischen Geschwindigkeitsänderungsvorrichtung die im Leiter induzierte Spannung bzw. der im Leiter induzierte Strom umso höher, je schneller sich das Magnetfeldteil relativ zum Induktionsteil bewegt. Der Zusammenhang zwischen Relativgeschwindigkeit und dem Betrag des lokalen Extremwerts der erfassten elektrischen Größe ist in den meisten Fällen linear, so dass die Kenntnis von zwei Wertepaaren aus Relativgeschwindigkeit und Extremwert der erfassten elektrischen Größe ausreichen kann. Dabei kann ein Wert der Koordinatenursprung sein, da bei einer Relativgeschwindigkeit von Null kein Strom und keine Spannung induziert werden, mithin deren Beträge ebenfalls Null sind.

Da die Beträge der lokalen Extremwerte der induzierten elektrischen Größe am Induktionsbeginn und am Induktionsende ohne Beschleunigung bzw. Verzögerung der an der Induktion beteiligten Teile nur aufgrund der wachsenden bzw. abnehmenden Überdeckung des Induktionsteils durch das Magnetfeldteil zunehmen bzw. abnehmen, kann das Verfahren ein Zählen der erfassten lokalen Extremwerte aufweisen und kann weiter ein Auswählen eines der Zahl des lokalen Extremwerts zugeordneten Kennfelds aus einer Schar von Kennfeldern aufweisen. Auf diese Weise kann auch in den transienten Erfassungszuständen vor Erreichen und nach dem Ende einer maximalen Überdeckung des Induktionsteils durch das Magnetfeldteil eine korrekte Relativgeschwindigkeit der beiden Teile zueinander ermittelt werden.

Ist eine maximale Überdeckung von Induktionsteil und Magnetfeldteil erreicht, ändern sich die Beträge der in diesem Erfassungszustand erfassten lokalen Extremwerte maßgeblich nur noch durch Änderung der Relativgeschwindigkeit und bleiben ansonsten konstant. Daher reicht es aus, für den Zustand maximaler Überdeckung von Induktionsteil und Magnetfeldteil ein Kennfeld bereitzustellen, das für alle in diesem Zustand auftretenden lokalen Extremwerte gilt.

Im Gegensatz zum ersten beschriebenen Verfahren zur Ermittlung der Relativgeschwindigkeit, das auf die während der Induktion auftretende Frequenz der induzierten elektrischen Größe abstellt, ist das zuletzt auf die Beträge der lokalen Extremwerte abstellende Verfahren im Falle einer Stromwerterfassung temperatursensitiv. Denn der Widerstand des der Induktion unterzogenen Leiters ändert sich mit dessen Temperatur. Daher kann das zuletzt beschriebene Verfahren folgende weitere Schritte aufweisen:
- Erfassen einer Temperatur des Leiters im Induktionsteil, und
- Auswählen eines Kennfelds aus einer Schar von Kennfeldern mit der Leitertemperatur oder einem Leitertemperaturbereich als dem Scharparameter.

Für Temperaturbereiche, in denen sich der Zusammenhang zwischen Relativgeschwindigkeit und Betrag des lokalen Extremwerts nur innerhalb einer vorbestimmten Genauigkeitsschwelle ändert, kann ein einziges Kennfeld vorgesehen sein.

Ebenso kann alternativ oder zusätzlich die Relativgeschwindigkeit zwischen Magnetfeldteil und Induktionsteil durch eine Vorrichtung ermittelt werden, die zur Ausführung des obigen zweiten Verfahrens ausgebildet ist. Hierzu kann es eine Speichervorrichtung umfassen, welche dazu ausgebildet ist, die genannten Kennfelder zu speichern. Weiter kann die Vorrichtung gemäß einer vorteilhaften Weiterbildung eine Temperaturerfassungseinrichtung zur Erfassung der Leitertemperatur für die oben beschriebene Temperaturkompensation aufweisen.

Nachfolgend wird die vorliegende Erfindung anhand der beiliegenden Zeichnungen näher erläutert. Es stellt dar:
- Figur 1: eine grobschematische Darstellung einer Ausführungsform einer erfindungsgemäßen Vorrichtung zur Ausführung eines erfindungsgemäßen Verfahrens und
- Figur 2: ein Beispiel einer Signalverarbeitung in der erfindungsgemäßen Vorrichtung durch das erfindungsgemäße Verfahren.

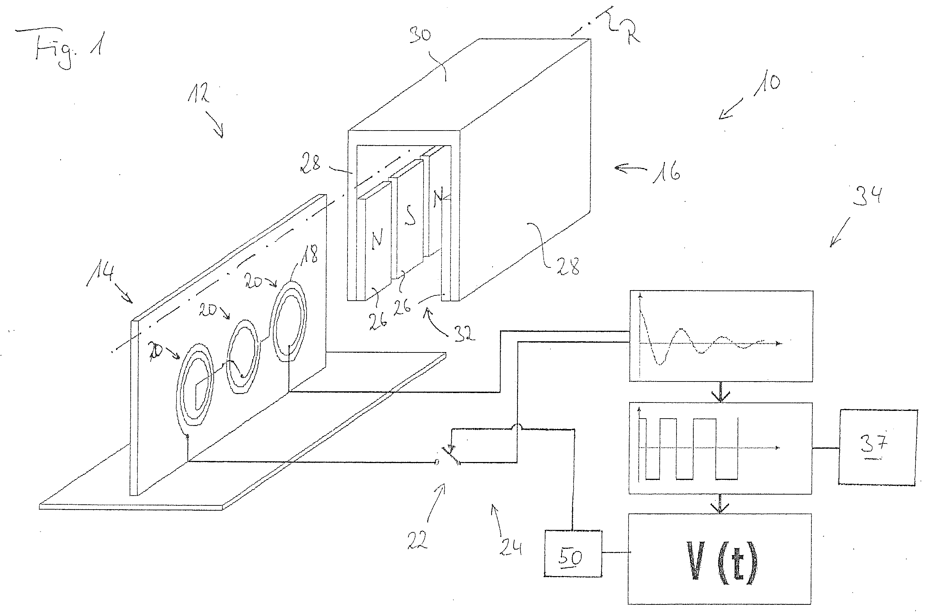

In Figur 1 ist eine erfindungsgemäße Ausführungsform der zuvor diskutierten Vorrichtung allgemein mit 10 bezeichnet.

Diese umfasst eine Geschwindigkeitsänderungsvorrichtung 12 mit einem vorzugsweise streckenfesten Induktionsteil 14 und einem relativ zu diesem längs einer Relativbewegungsbahn R beweglichen Magnetfeldteil 16.

Das Magnetfeldteil 16 kann beispielsweise an ein Fahrzeug zur gemeinsamen Bewegung mit diesem montiert sein. Bei dem Fahrzeug kann es sich um ein schienengebundenes oder sonstwie weggebundenes Fahrzeug handeln, so dass die Relativbewegungsbahn R durch den Verlauf des Wegs, also beispielsweise der Schienen, vorgegeben ist. Im Falle eines schienengebunden Fahrzeugs ist das Induktionsteil 14 vorzugsweise mit einem Schienenträger oder sonst einem fest mit der Schiene verbundenen Bauteil ortsfest derart gekoppelt, dass es eine Bewegung des Fahrzeugs nicht stört.

In dem Induktionsteil 14 ist eine Leiterbahn 18 eines elektrischen Leiters grobschematisch dargestellt. Es kann sich bei der Leiterbahn 18 beispielsweise um die Leiterbahn einer von drei Drehstromphasen handeln, mit denen das Induktionsteil 14 als Statorbauteil eines Linearmotors bei Bestromung für Antriebskraft zur Beschleunigung des Magnetfeldteils 16 sorgen kann.

Auch wenn im Folgenden die vorliegende Erfindung zur Vereinfachung der Erläuterung nur anhand einer einzigen Leiterbahn 18, also beispielsweise anhand einer einzigen Phase eines Drehstromsystems erläutert wird, kann in einem mehrphasigen Leitersystem des Induktionsteils eine Mehrzahl von unterschiedlichen Phasen zugeordneten Leitern oder sogar jeder einer unterschiedlichen Phase zugeordnete Leiter mit dem nachfolgend beschriebenen Erfassungs- und Geschwindigkeitsermittlungssystem versehen sein.

Wie in Figur 1 dargestellt ist, kann die Leiterbahn 18 an einem oder an mehreren Stellen zu einer Spule 20 gewickelt sein, um etwa bei Stromdurchfluss für ein lokal starkes Magnetfeld zum Vortrieb des Magnetfeldteils 16 sorgen zu können oder um im Falle der Verwendung als Wirbelstrombremse besonders effektiv Wirbelströme und davon ausgehend das Magnetfeld 16 verzögernde wirbelstrombedingte Magnetfelder erzeugen zu können.

Die Leiterbahn 18 kann also mit einer Stromversorgung gekoppelt sein, welche in Figur 1 nicht dargestellt ist. Eine Aktivierung der Leiterbahn 18 kann durch einen Schalter 22 erfolgen, welcher den Stromkreis der Leiterbahn 18 schließen und unterbrechen kann.

In dem in Figur 1 dargestellten Zustand ist der Schalter 22 geöffnet, so dass ein das Induktionsteil 14 überfahrendes Magnetfeldteil 16 zwar Spannung in den Spulen 20 und damit in der Leiterbahn 18 induzieren kann, jedoch die induzierte Spannung nicht zu einem Stromfluss führen kann. Somit entfaltet die Geschwindigkeitsänderungsvorrichtung 12 bei geöffnetem Schalter 22 keine Bremswirkung.

Bei geschlossenem Schalter 22 führt dagegen die beim Überfahren durch das Magnetfeldteil 16 in das Induktionsteil 14, genauer in dessen Leiterbahn 18, induzierte Spannung zu einem Stromfluss, welcher in den Spulen wiederum ein dem Magnetfeld des Magnetfeldteils 16 entgegenwirkendes Magnetfeld erzeugt und somit für eine Bremswirkung als Wirbelstrombremse sorgt.

Das Magnetfeldteil 16 kann vorzugsweise als Jochbauteil mit zwei parallelen, Magnete 26 tragenden Schenkeln 28 und einer die Schenkel 28 verbindenden Basis 30 ausgestaltet sein. Die parallelen Schenkel 28 können dabei zwischen sich, insbesondere zwischen den von ihnen gehaltenen Magneten 26 einen von einem Magnetfeld durchsetzten Luftspalt 32 bilden, durch welchen hindurch das Induktionsteil 14 zwischen den Schenkeln 28 längs der Relativbewegungsbahn (R) hindurchbewegt werden kann.Ebenso kann das Magnetfeldteil 16 nur auf einer zum Induktionsteil 14 hinweisenden Seite mit Magneten 26 bestückt sein.

Das Magnetfeldteil 16 weist zur Erzeugung eines für eine Induktion besonders effektiven Magnetfelds längs der Relativbewegungsbahn R aufeinander folgende Magnete 26 auf, welche mit alternierender Polarisierung vorgesehen sind. Der Abstand der vorauseilenden Ränder unmittelbar aufeinanderfolgender Magnete 26 entgegengesetzter Polaritätsanordnung ist der Polteilungsabstand.

So kann beispielsweise der in Figur 1 am linken Schenkel 28 vorgesehene randnächste Magnet 26 mit seinem Nordpol zu dem gegenüberliegenden rechten Schenkel 28 hin weisen. In diesem Falle wäre der nächste Magnet 26 derart angeordnet, dass dessen Südpol zum Luftspalt 32 und damit zum gegenüberliegenden Schenkel 28 hin weist, wobei auf diesen wieder ein Magnet folgt, dessen Nordpol zum Luftspalt 32 und damit zum gegenüberliegenden Schenkel 28 hin weist.

In diesem bevorzugten Fall alternierender Polaritätsanordnung mehrerer Magnete 26 sind die an dem in Figur 1 rechten Schenkel 28 vorgesehenen Magnete 26 ebenfalls längs der Relativbewegungsbahn R mit alternierender Polarisierung vorgesehen, und zwar so, dass sich über den Luftspalt 32 hinweg ungleichnamige Magnetpole gegenüberliegen. In diesem Falle ist der zwischen den einander gegenüberliegenden Magneten 26 gelegene Raum des Luftspalts 32 mit einem vorteilhaft lokal homogenen Magnetfeld mit im Wesentlichen geraden Magnetfeldlinien durchsetzt, das bei der Hindurchbewegung des Induktionsteils 14 durch den Luftspalt 32 orthogonal die Leiterbahn 18 und die aus ihr vorteilhafterweise gebildeten Spulen 20 durchsetzt und somit zu einer möglichst effektiven Induktion führt. Bei Verwendung eines nur einseitig mit Magneten bestückten Magnetfeldteils ist das Magnetfeld weniger homogen, jedoch immer noch ausreichend zur Induktion wirksam. Ein einseitig bestücktes Magnetfeldteil kann beispielsweise nur einen der Schenkel 28 in der beschriebenen Ausgestaltung aufweisen. Zur Erhöhung der Homogenität des Magnetfelds kann bei der einseitigen Ausführung auf der vom Magnetfeldteil abgewandten Seite des Induktionsteils ein Rückschlusselement aus ferromagnetischem Material vorgesehen sein.

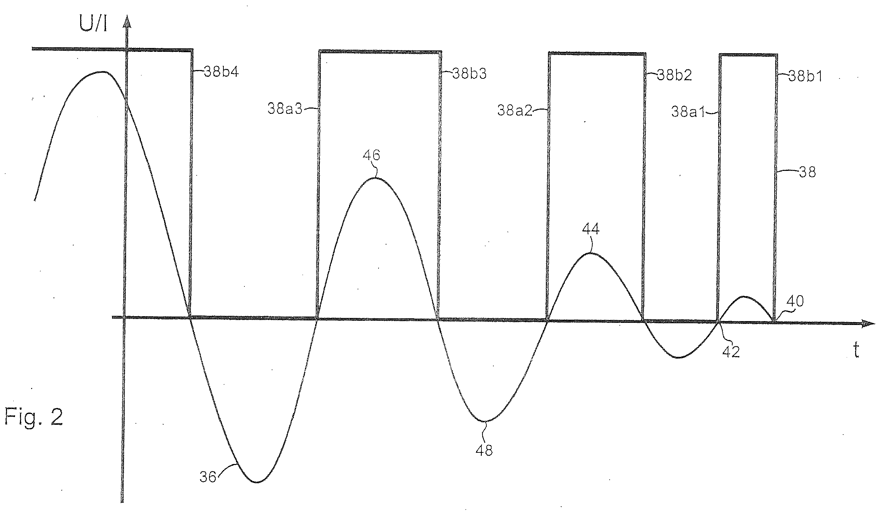

Wenn das Magnetfeldteil 16, unabhängig von seiner Ausgestaltung als nur einseitig bestücktes Magnetfeldteil oder als beidseitig bestücktes Jochbauteil, das Induktionsteil 14 überfährt, wird in einer an die Leiterbahn 18 angeschlossenen elektrischen Schaltung 34 zunächst die induzierte elektrische Größe erfasst. Ihr zeitlicher Verlauf ist bei der oben beschriebenen beispielhaften Magnetanordnung des Magnetfeldteils 16 ein oszillierender Graph, wie er lediglich beispielhaft als Graph 36 in Figur 2 dargestellt ist.

Der Graph 36 kann ein Verlauf der Stromstärke I über die Zeit t sein, wenn der Schalter 22 geschlossen ist und tatsächlich Strom in der Leiterbahn 18 induziert wird, oder kann ein Verlauf einer induzierten Spannung U über die Zeit t sein, wenn der Schalter 22 geöffnet ist und nur eine Spannung in der Leiterbahn 18 induziert wird.

Tatsächlich sind Spannung und Strom im Falle einer elektromagnetischen Induktion zueinander phasenverschoben, was im vorliegenden Fall jedoch vernachlässigt werden soll, da es für die Ermittlung der Relativgeschwindigkeit von Magnetfeldteil 16 und Induktionsteil 14 nicht auf das Verhältnis der Spannungskurve und der Stromkurve zueinander ankommt, sondern nur auf die Gestalt jedes einzelnen Graphen für sich alleine genommen.

Der Ursprung des Koordinatensystems liegt in der Gegenwart, der nach rechts führende Zeitstrahl in Figur 2 führt zunehmend in die Vergangenheit, so dass Werte der induzierten elektrischen Größe zeitlich umso weiter zurückliegend erfasst wurden, je weiter rechts sie auf der Skala liegen.

Da mit Beginn des Eintauchens des Induktionsteils 14 in den Luftspalt 32 (bei Bezugszeichen 40) zunächst nur das Magnetfeld eines sich über den Luftspalt 32 hinweg gegenüberliegenden Magnetpaares auf einen Teil der Leiterbahn 18 einwirkt, ist die anfängliche Amplitude der induzierten elektrischen Größe klein.

Mit zunehmender Überdeckung der Leiterbahn 18 durch das Magnetfeld des Magnetfeldteils 16 steigt die Wirkung der Induktion an und damit die Amplitude der erfassten induzierten elektrischen Größe.

Im vorliegenden Fall soll die Stromstärke I als elektrische Größe erfasst werden.

Der zeitliche Verlauf 36 der erfassten induzierten elektrischen Größe kann vorteilhaft zur Erleichterung der nachfolgenden Auswertung und zur Erhöhung der Genauigkeit des erhaltenen Ergebnisses von der Schaltung 34 in ein Rechtecksignal 38 umgewandelt und einer speicherprogrammierbaren Steuerung oder allgemein einer elektronischen Steuerung eingegeben werden, wobei die Nulldurchgänge des Rechtecksignals 38 vorzugsweise innerhalb einer vorbestimmten Toleranz mit den Nulldurchgängen des zeitlichen Verlaufs 36 der tatsächlich erfassten elektrischen Größe übereinstimmen. Auch das Rechtecksignal 38 stellt somit einen erfassten zeitlichen Verlauf der induzierten elektrischen Größe im Sinne der vorliegenden Anmeldung dar.

Das Rechtecksignal 38 kann beispielsweise ein Spannungssignal sein, welches unabhängig von der tatsächlichen Amplitude des zeitlichen Verlaufs der erfassten elektrischen Größe eine betragsmäßig konstante Amplitude aufweist, beispielsweise einen Wert von + oder- 24 V oder, wie in Fig. 2 dargestellt, von 0 und +24 V. Entscheidend ist, dass das Rechtecksignal zwei unterschiedliche, ausreichend unterscheidbare Signalpegel aufweist, von welchen der eine als Low-Pegel und der andere als High-Pegel zur weiteren Signalverarbeitung verwendbar sind.

In Figur 2 sind alle fallenden Flanken des Rechtecksignals 38 mit dem Kleinbuchstaben a und fortlaufender Nummer bezeichnet. Analog hierzu sind die steigenden Flanken mit dem Kleinbuchstaben b und fortlaufender Nummer bezeichnet.

Das Rechtecksignal 38 weist also an seinem am weitesten in der Vergangenheit gelegenen dargestellten Punkt (Induktionsbeginn) zunächst eine steigende Flanke 38b1 auf, welche zu dem positiven High-Pegelwert konstanter Amplitude (hier: +24 V) führt, bis ausgehend von diesem Wert eine erste fallende Flanke 38a1 auf einen konstanten Low-Pegelwert (hier: Null Volt) führt. Von diesem ausgehend steigt das Rechtecksignal 38 durch eine steigende Flanke 38b2 wieder auf den positiven konstanten High-Signalwert, auf den wiederum eine fallende Flanke 38a2 folgt, usw.

Es fällt auf, dass bei dem in Figur 2 dargestellten Beispiel die Zeitspannen zwischen zwei aufeinanderfolgenden Flanken 38ai und 38bi mit i = 1, 2, 3 ... mit fortschreitender Zeit ebenso länger werden wie die Zeitspannen zwischen gleichartigen Flanken 38ai oder 38bi mit i = 1, 2, 3 ...

Aus dem Rechtecksignal 38, ebenso wie aus dem ursprünglichen zeitlichen Verlauf 36 der erfassten induzierten elektrischen Größe, lassen sich in mannigfaltiger Weise Weg- und Zeitinformationen erhalten, aus denen die Relativgeschwindigkeit zwischen Induktionsteil 14 und Magnetfeldteil 16 ermittelt werden kann.

Beispielsweise können als charakteristische Stellen Nulldurchgänge 40 und 42 ausgewählt werden, was einer Auswahl der steigenden Flanke 38b1 und der fallenden Flanke 38a1 als charakteristische Stellen im Rechtecksignal 38 entspricht. Die diesen Nulldurchgängen bzw. Flanken zugeordneten Erfassungszeitpunkte sind unmittelbar aus dem zeitlichen Verlauf 36 oder aus dem daraus gebildeten Rechtecksignal 38 ableitbar und mit ihnen der zwischen ihnen liegende zeitliche Abstand. Die die induzierte elektrische Größe erfassende Schaltung kann derart ausgebildet sein, dass sie für jede auftretende Flanke einen Zeitstempel auslöst, also einen der jeweiligen Flanke zugeordneten Zeitwert ihres Auftretens speichert. Die Differenz zwischen zwei Zeitwerten ist dann der zeitliche Abstand zwischen den ihnen zugeordneten Flanken.

Ebenso ist klar, dass das zwischen diesen beiden Nulldurchgängen liegende induzierte elektrische Signal nur durch eine einzige Magnetanordnung bzw. ein einziges sich über den Luftspalt 32 gegenüberlieges Magnetpaar hervorgerufen werden konnte, so dass in der zwischen den Zeitpunkten der Nulldurchgänge 40 und 42 gelegenen Zeit das Magnetfeldteil 16 relativ zum Induktionsteil 14 einen Polteilungsabstand zurückgelegt hat. In einer Speichervorrichtung 36 können konstruktive Abmessungen des Magnetfeldteils 16 hinterlegt sein, so dass die Schaltung 34 anhand des ermittelten zeitlichen Abstands und der zugeordneten, gegebenenfalls aus der Speichervorrichtung 37 abgerufenen, Weginformation ohne Weiteres die Relativgeschwindigkeit des Magnetfeldteils 16 relativ zum Induktionsteil 14 durch Division der Weginformation durch die Zeitinformation ermitteln kann.

Es ist ebenso klar, dass beliebige andere charakteristische Stellen aus dem Rechtecksignal 38 oder aus dem zeitlichen Verlauf 36 ausgewählt werden können, solange nur die entsprechende Weginformation zugeordnet wird. Beispielsweise können die unmittelbar aufeinanderfolgenden steigenden Flanken 38b1 und 38b2 aus Figur 2 als charakteristische Stellen bzw. Werte des Rechtecksignals 38 ausgewählt werden. In der zwischen diesen steigenden Flanken liegenden Zeitdauer wurde der Weg zwischen zwei gleichnamigen Polen, also der doppelte Polteilungsabstand längs der Relativbewegungsbahn R zurückgelegt.

Gleiches gilt, wenn man beispielsweise an der zeitlichen Verlaufskurve 36 des ursprünglich erfassten Signals unmittelbar aufeinanderfolgende lokale Maxima 44 und 46 als charakteristische Stellen bzw. Werte auswählt.

Es ist aber alternativ oder zusätzlich auch möglich, unmittelbar aufeinanderfolgende lokale Extremstellen, wie etwa das lokale Maximum 44 und das lokale Minimum 48 oder das lokale Minimum 48 und das lokale Maximum 46 als charakteristische Stellen auszuwählen. Zwischen diesen beiden ausgewählten charakteristischen Stellen und den ihnen zugeordneten Zeitpunkten wurde jeweils ein Polteilungsabstand vom Magnetfeldteil 16 und Induktionsteil 14 relativ zueinander zurückgelegt.

Wie aus Figur 2 zu erkennen ist, zeigt der zeitliche Verlauf 36 eine verzögerte Bewegung von Magnetfeldteil 16 und Induktionsteil 14 relativ zueinander an, denn mit Annäherung an die Gegenwart werden die Periodendauern länger, in denen gleiche Strecken überstrichen werden. Demzufolge ist bei der Erfassung des in Figur 2 beispielhaft gezeigten Graphen 36 der Schalter 22 in Figur 1 geschlossen und das Induktionsteil 14 arbeitet als Stator einer linearen Wirbelstrombremse zur Verzögerung des Magnetfeldteils 16. Aus diesem Grunde ist in Figur 2, wie oben erwähnt, die erfasste elektrische Größe der induzierte Strom.

Wie in Figur 1 angedeutet ist, kann weiter eine Steuervorrichtung 50 vorgesehen sein, die abhängig von der ermittelten Relativgeschwindigkeit zwischen Magnetfeldteil 16 und dem Induktionsteil 14 den Schalter 22 öffnet oder schließt und somit für die Begrenzung der Bremswirkung des Induktionsteils 14 sorgen kann. Die Steuervorrichtung 50 kann auch in der Art einer geschlossenen Regelschleife als Regelvorrichtung ausgebildet sein und auf die Erreichung eines gewünschten Soll-Relativgeschwindigkeits-Werts hinwirken. Dies ist insbesondere an Gefällestrecken von Vorteil, an denen durch Schwerkraft ohne sonstige Einwirkung von außen eine Relativbeschleunigung von Induktionsteil und Magnetfeldteil erfolgt. Deshalb ist die erfindungsgemäße Vorrichtung vorteilhaft an Gefälle- bzw. Steigungsstrecken angeordnet.

Mit der beschriebenen Vorrichtung und dem beschriebenen Verfahren kann die Relativgeschwindigkeit von Induktionsteil 14 und Magnetfeldteil 16 relativ zueinander bei einer Verwendung des Rechtecksignals 38 mit einer Auflösung von einem Polteilungsabstand ermitteln. Bei Heranziehung des unmittelbar erfassten Signals kann die Auflösung noch höher sein, etwa ein halber Polteilungsabstand, wenn unmittelbar aufeinanderfolgende Nullstellen und lokale Extremwerte als charakteristische Stellen bzw. Werte ausgewählt werden.

Überdies kann so die Relativgeschwindigkeit solange ermittelt werden, wie Induktionsteil und Magnetfeldteil in Induktionseingriff mit einander stehen, das ist also die Länge des Induktionsteils plus die Länge des Magnetfeldteils. Über diese Länge hinweg kann die Relativgeschwindigkeit mit der oben beschriebenen Auflösung dargestellt werden. Die Erfassung der elektrischen Größe muss dabei so vorgenommen werden, dass wenigstens zwei charakteristische Stellen bzw. Werte erfasst werden.

Alternativ oder zusätzlich kann die Relativgeschwindigkeit von Induktionsteil 14 und Magnetfeldteil 16 aus den Beträgen der lokalen Extremwerte des Graphen 36 ermittelt werden, etwa aus dem lokalen Maximum 44, dem lokalen Maximum 46, dem lokalen Minimum 48 oder aus irgendeinem anderen, nicht mit Bezugsversehenen lokalen Extremwert.

Da die in Fig. 2 rechts des Koordinatenursprungs gelegenen lokalen Extremwerte allesamt während einer transienten Phase der Induktion ermittelt wurden, während welcher die Überdeckung des Induktionsteils durch das Magnetfeldteil noch zunahm (Einfahren des Induktionsteils in das Magnetfeld des Magnetfeldteils), ist vorzugsweise für jeden lokalen Extremwert oder wenigstens für jeden vorbestimmten lokalen Extremwert der transienten Phase ein gesondertes Kennfeld vorhanden, welches dem Betrag des betreffenden Extremwerts eine Relativgeschwindigkeit zuordnet. Durch Zählen der auftretenden lokalen Extremwerte kann das richtige Kennfeld ausgewählt werden, um durch Vergleich mit diesem aus dem Betrag des erfassten lokalen Extremwerts mit ausreichender Genauigkeit auf die Relativgeschwindigkeit zwischen Magnetfeldteil 16 und Induktionsteil 14 schließen zu können.

Weiter kann eine Temperatur des Leiters 18 ermittelt werden, welche bei der Auswahl des Kennfelds berücksichtigt werden kann. So kann eine Temperaturkompensation erreicht werden. Der Temperatur des Leiters 18 steht in der Regel eine Temperatur des Induktionsteils 14 im Wesentlichen gleich, so dass die Temperatur für eine Temperaturkompensation auch an einer vom Leiter entfernt gelegenen Stelle des Induktionsteils gemessen werden kann.

Die zuvor genannten Scharparameter zur Auswahl eines Kennfelds zum Vergleich mit einem Betrag eines erfassten lokalen Extremwerts der induzierten elektrischen Größe können auch in einem einzigen Kennfeld realisiert sein, dass dann entsprechend mehrdimensional sein muss.

## Patentansprüche

1. Verfahren zur Ermittlung einer Relativgeschwindigkeit von längs einer Relativbewegungsbahn (R) relativ zueinander beweglichen Teilen einer elektromagnetischen Wirbelstrombremse (12), insbesondere eines als Wirbelstrombremse verwendeten Linearmotors (12), mittels dieser Wirbelstrombremse (12), die Wirbelstrombremse (12) umfassend ein Induktionsteil (14) mit wenigstens einem elektrischen Leiter (18), welcher an einem Stromkreis beteiligt ist, der durch wenigstens einen Schalter (22) unterbrochen oder geschlossen werden kann, und ein relativ zum Induktionsteil (14) bewegliches Magnetfeldteil (16) mit wenigstens einer Magnetanordnung (26) zur Bereitstellung eines von dem Magnetfeldteil (16) ausgehenden Magnetfelds, wobei an der Wirbelstrombremse (12) eine Wirkung einer Verzögerung durch Betätigen des wenigstens einen Schalters (22) einschaltbar bzw. ausschaltbar ist,
wobei das Verfahren folgende Schritte umfasst:
- Erfassen einer durch das Magnetfeldteil (16) im Induktionsteil (14) induzierten elektrischen Größe über eine Zeitdauer während einer aufgrund der Relativbewegung von Induktionsteil (14) und Magnetfeldteil (16) im Induktionsteil (14) bewirkten Induktion hinweg,
- Auswählen von wenigstens zwei zeitlich nacheinander auftretenden charakteristischen Stellen oder Werten (38a, 38b, 40, 42, 44, 46, 48) der elektrischen Größe, wie etwa Nulldurchgänge (42) bei steigender Flanke, Nulldurchgänge (40) bei fallender Flanke, Wendepunkte in der steigenden Flanke, Wendepunkte in der fallenden Flanke, lokale Maxima (44/46), lokale Minima (48), und dergleichen,
- für wenigstens zwei ausgewählte charakteristische Stellen bzw. Werte (38a1/38a2, 38b1/38b2, 40/42, 44/46, 44/48, 48/46): Bestimmen des zeitlichen Abstands zwischen diesen,
- für wenigstens die zwei ausgewählten charakteristischen Stellen bzw. Werte, deren zeitlicher Abstand voneinander bestimmt wurde: Bestimmen der räumlichen Distanz längs der Relativbewegungsbahn (R), welche vom Magnetfeldteil (16) relativ zum Induktionsteil (14) zwischen dem Auftreten der wenigstens zwei ausgewählten charakteristischen Stellen bzw. Werte (38a1/38a2, 38b1/38b2, 40/42, 44/46, 44/48, 48/46) zurückgelegt wurde, und
- Ermitteln der Relativgeschwindigkeit aus der bestimmten räumlichen Distanz und dem bestimmten zeitlichen Abstand zwischen den wenigstens zwei ausgewählten charakteristischen Stellen bzw. Werten (38a1/38a2, 38b1/38b2, 40/42, 44/46, 44/48, 48/46),
- Betreiben der Wirbelstrombremse (12) in Abhängigkeit von der auf Grundlage der erfassten induzierten elektrischen Größe ermittelten Relativgeschwindigkeit zur Änderung derselben.

2. Verfahren nach Anspruch 1,
**dadurch gekennzeichnet, dass** dann, wenn der unter Beteiligung des elektrischen Leiters (18) gebildete Stromkreis unterbrochen ist, die erfasste induzierte elektrische Größe die induzierte elektrische Spannung ist, und dass dann, wenn der Stromkreis geschlossen ist, die erfasste induzierte elektrische Größe der induzierte Strom ist.

3. Vorrichtung zur Ermittlung einer Relativgeschwindigkeit von längs einer Relativbewegungsbahn (R) relativ zueinander beweglichen Teilen einer elektromagnetischen Wirbelstrombremse (12), insbesondere eines als Wirbelstrombremse verwendeten Linearmotors (12), mittels der Wirbelstrombremse (12), die Vorrichtung umfassend:
- ein Induktionsteil (14) der Wirbelstrombremse (12) mit wenigstens einem elektrischen Leiter (18), welcher an einem Stromkreis beteiligt ist, der durch wenigstens einen Schalter (22) unterbrochen oder geschlossen werden kann, und
- ein relativ zum Induktionsteil (14) bewegliches Magnetfeldteil (16) mit wenigstens einer Magnetanordnung (26) zur Bereitstellung eines von dem Magnetfeldteil (16) ausgehenden Magnetfelds,
- eine elektrische Schaltung (34), welche dazu ausgebildet ist, eine aufgrund der Relativbewegung von Induktionsteil (14) und Magnetfeldteil (16) durch das Magnetfeldteil (16) im Induktionsteil (14) induzierte elektrische Größe über eine Zeitdauer während der Induktion hinweg zu erfassen,
- eine Speichervorrichtung (37), in welcher wenigstens eine auf die wenigstens eine Magnetanordnung (26) bezogene Abmessung des Magnetfeldteils (16) längs der Relativbewegungsbahn (R), wie etwa Länge der wenigstens einen Magnetanordnung (26), Polteilungsabstand und dergleichen, gespeichert ist,
- eine Steuereinrichtung (50), die dazu ausgebildet ist, die Wirbelstrombremse (12) in Abhängigkeit von der auf Grundlage der erfassten induzierten elektrischen Größe ermittelten Relativgeschwindigkeit zur Änderung derselben zu betreiben,
wobei hierzu an der Wirbelstrombremse (12) eine Wirkung einer Verzögerung durch Betätigen des wenigstens einen Schalters (22) ein- und ausschaltbar ist,
wobei die elektrische Schaltung (34) dazu ausgebildet ist,
- wenigstens zwei zeitlich nacheinander auftretende charakteristische Stellen oder Werte (38a, 38b, 40, 42, 44, 46, 48) der elektrischen Größe, wie etwa Nulldurchgänge (42) bei steigender Flanke, Nulldurchgänge (40) bei fallender Flanke, Wendepunkte in der steigenden Flanke, Wendepunkte in der fallenden Flanke, lokale Maxima (44, 46), lokale Minima (48), und dergleichen, auszuwählen,
- für wenigstens zwei ausgewählte charakteristische Stellen bzw. Werte (38a1/38a2, 38b1/38b2, 40/42, 44/46, 44/48, 48/46) deren zeitlichen Abstand voneinander zu bestimmen,
- für wenigstens die zwei ausgewählten charakteristischen Stellen bzw. Werte (38a1/38a2, 38b1/38b2, 40/42, 44/46, 44/48, 48/46), deren zeitlicher Abstand voneinander bestimmt wurde, die räumliche Distanz längs der Relativbewegungsbahn (R) zu bestimmen, welche vom Magnetfeldteil (16) zwischen dem Auftreten der wenigstens zwei ausgewählten charakteristischen Stellen bzw. Werte (38a1/38a2, 38b1/38b2, 40/42, 44/46, 44/48, 48/46) relativ zum Induktionsteil zurückgelegt wurde, und
- die Relativgeschwindigkeit aus der bestimmten räumlichen Distanz und dem bestimmten zeitlichen Abstand zwischen den wenigstens zwei ausgewählten charakteristischen Stellen bzw. Werten (38a1/38a2, 38b1/38b2, 40/42, 44/46, 44/48, 48/46) zu ermitteln,
wobei die Speichervorrichtung (37) zur Speicherung von Daten der ausgewählten charakteristischen Stellen bzw. Werte (38a, 38b, 40, 42, 44, 46, 48) oder/und deren zeitlichen Auftretens oder/und deren zeitlichen Abstands oder/und vorzugsweise eines zeitlichen Verlaufs (36, 38) der erfassten elektrischen Größe ausgebildet ist.

4. Vorrichtung nach Anspruch 3,
**dadurch gekennzeichnet, dass** dann, wenn der unter Beteiligung des wenigstens einen elektrischen Leiters (18) gebildete Stromkreis unterbrochen ist, die erfasste induzierte elektrische Größe die induzierte Spannung ist, und dass dann, wenn der Stromkreis geschlossen ist, die erfasste induzierte elektrische Größe der induzierte Strom ist.

5. Vorrichtung nach Anspruch 3 oder 4,
**dadurch gekennzeichnet, dass** die Schaltung (34) dazu ausgebildet ist, die erfasste elektrische Größe in ein Rechtecksignal (38) umzuwandeln.

6. Vorrichtung nach Anspruch 5,
**dadurch gekennzeichnet, dass** die Schaltung (34) dazu ausgebildet ist, Flanken (38a, 38b) des Rechtecksignals (38) als charakteristische Stellen (38a, 38b) auszuwählen.

7. Vorrichtung nach einem der vorhergehenden Ansprüche 3 bis 6,
**dadurch gekennzeichnet, dass** das Magnetfeldteil (16) längs der Relativbewegungsbahn (R) eine Mehrzahl von aufeinander folgenden Magnetanordnungen (26) jeweils entgegengesetzter Polaritätsanordnung aufweist.

8. Vorrichtung nach Anspruch 6 oder 7,
**dadurch gekennzeichnet, dass** die Schaltung (34) dazu ausgebildet ist, nur steigende Flanken (38b) oder nur fallende Flanken (38a) des Rechtecksignals (38) als charakteristische Stellen (38a, 38b) auszuwählen.

9. Vorrichtung nach Anspruch 7 oder nach Anspruch 8 unter Rückbeziehung auf den Anspruch 7,
**dadurch gekennzeichnet, dass** eine auf die wenigstens eine Magnetanordnung (26) bezogene Abmessung des Magnetfeldteils (16) als die längs der Relativbewegungsbahn (R) zurückgelegte räumliche Distanz einen Polteilungsabstand der Mehrzahl von Magnetanordnungen (26) umfasst.

10. Vorrichtung nach einem der vorhergehenden Ansprüche,
**dadurch gekennzeichnet, dass** die Schaltung (34) dazu ausgebildet ist, die auftretenden charakteristischen Stellen oder Werte (38a, 38b, 40, 42, 44, 46, 48) zu zählen.

11. Vorrichtung nach Anspruch 10,
**dadurch gekennzeichnet, dass** die Schaltung (34) dazu ausgebildet ist, aus einer einer charakteristischen Stelle oder Wert (38a, 38b, 40, 42, 44, 46) zugeordneten Zählungszahl unter Berücksichtigung wenigstens einer auf die wenigstens eine Magnetanordnung (26) bezogene Abmessung des Magnetfeldteils (16) eine Relativstellung zwischen Magnetfeldteil (16) und Induktionsteil (14) zu ermitteln.

12. Verwendung eines Linearantriebs oder/und einer Wirbelstrombremse zur Ermittlung einer Relativgeschwindigkeit zwischen relativ zueinan der längs einer Relativbewegungsbahn (R) beweglichen Teile: Magnetfeldteil (16) und Induktionsteil (14), des Linearantriebs oder/und der Wirbelstrombremse, insbesondere unter Ausführung des oben bezeichneten Verfahrens oder/und unter Verwendung der oben bezeichneten Vorrichtung.

## Claims

1. Method for determining a relative speed of parts of an electromagnetic eddy current brake (12) movable in relation to one another along a relative movement path (R), in particular of a linear motor (12) used as eddy current brake, by means of this eddy current brake (12), said eddy current brake (12) comprising an induction portion (14) with at least one electric conductor (18) which is part of an electric circuit which can be interrupted or closed by at least one switch (22), and a magnetic field portion (16) movable in relation to the induction portion (14) with at least one magnet arrangement (26) for providing a magnetic field originating from said magnetic field portion (16), wherein at said eddy current brake (12) an effect of a deceleration can be switched on or switched off by actuating the at least one switch (22),
wherein the method comprises the following steps:
- detecting an electric parameter induced by the magnetic field portion (16) in the induction portion (14) over a time period during an induction generated in the induction portion (14) due to the relative movement of the induction portion (14) and the magnetic field portion (16),
- selecting at least two chronological characteristic positions or values (38a, 38b, 40, 42, 44, 46, 48) of the electric parameter, such as for example zero-crossings (42) at rising edge, zero-crossings (40) at falling edge, turning points in the rising edge, turning points in the falling edge, local maxima (44/46), local minima (48) and the like,
- for at least two selected characteristic positions or values (38a1/38a2, 38b1/38b2, 40/42, 44/46, 44/48, 48/46): determining the time lag between the latter,
- for the at least two selected characteristic positions or values, the time lag of which has been determined: determining the physical distance along the relative movement path (R) travelled by the magnetic field portion (16) in relation to the induction portion (14) between the occurrence of the at least two selected characteristic positions or values (38a1/38a2, 38b1/38b2, 40/42, 44/46, 44/48, 48/46), and
- determining the relative speed from the determined physical distance and the determined time lag between the at least two selected characteristic positions or values (38a1/38a2, 38b1/38b2, 40/42, 44/46, 44/48, 48/46),
- operating the eddy current brake (12) depending on the relative speed determined on the basis of the detected induced electric parameter for modifying the relative speed.

2. Method according to claim 1,
**characterized in that,** when the electric circuit formed with the electric conductor (18) has been interrupted, the detected induced electric parameter is the induced electric voltage, and that when the electric circuit is closed, the detected induced electric parameter is the induced current.

3. Device for determining a relative movement of parts of an electromagnetic eddy current brake (12) movable in relation to one another along a relative movement path (R), in particular of a linear motor (12) used as eddy current brake, by means of said eddy current brake (12), said device comprising:
- an induction portion (14) of the eddy current brake (12) with at least one electric conductor (18) which is part of an electric circuit which can be interrupted or closed by means of at least one switch (22), and
- a magnetic field portion (16) movable in relation to the induction portion (14) with at least one magnet arrangement (26) for providing a magnetic field originating from said magnetic field portion (16),
- an electric circuit (34) which is adapted for detecting an electric parameter over a certain time during induction induced because of the relative movement of the induction portion (14) and the magnetic field portion (16) by the magnetic field portion (16) in the induction portion (14),
- a storage device (37) where at least one dimension of the magnetic field portion (16) along the relative movement path (R) in relation to the at least one magnet arrangement (26), such as for example the length of the at least one magnet arrangement (26), pole pitch distance and the like is stored,
- a control device (50), adapted for operating the eddy current brake (12) depending on the relative speed determined on the basis of the detected induced electric parameter for modifying the relative speed,
wherein for this purpose, at the eddy current brake (12), an effect of a deceleration can be switched on or switched off by actuating the at least one switch (22),
wherein the electric circuit (34) is adapted for
- selecting at least two chronological characteristic positions or values (38a, 38b, 40, 42, 44, 46, 48) of the electric parameter, such as for example zero-crossings (42) at rising edge, zero-crossings (40) at falling edge, turning points in the rising edge, turning points in the falling edge, local maxima (44/46), local minima (48) and the like,
- for at least two selected characteristic positions or values (38a1/38a2, 38b1/38b2, 40/42, 44/46, 44/48, 48/46) determining the time lag between the latter,
- for the at least two selected characteristic positions or values (38a1/38a2, 38b1/38b2, 40/42, 44/46, 44/48, 48/46) the time lag of which has been determined determining the physical distance along the relative movement path (R) travelled by the magnetic field (16) in relation to the induction portion between the occurrence of the at least two selected characteristic positions or values (38a1/38a2, 38b1/38b2, 40/42, 44/46, 44/48, 48/46), and
- determining the relative speed from the determined physical distance and the determined time lag between the at least two selected characteristic positions or values (38a1/38a2, 38b1/38b2, 40/42, 44/46, 44/48, 48/46), wherein the storage device (37) is adapted for storing data of the selected characteristic positions or values (38a, 38b, 40, 42, 44, 46, 48) or/and their occurrence in time or/and their time lag or/and preferably a chronological sequence (36, 38) of the detected electric parameter.

4. Device according to claim 3,
**characterised in that**, when the electric circuit formed with the electric conductor (18) has been interrupted, the detected induced electric parameter is the induced electric voltage, and that when the electric circuit is closed, the detected induced electric parameter is the induced current.

5. Device according to claim 3 or 4,
**characterised in that** the circuit (34) is adapted for converting the detected electric parameter into a square wave signal (38).

6. Device according to claim 5,
**characterised in that** the circuit (34) is adapted for selecting edges (38a, 38b) of the square wave signal (38) as characteristic positions (38a, 38b).

7. Device according to one of the preceding claims 3 to 6,
**characterised in that** the magnetic field portion (16) comprises along the relative movement path (R) a plurality of subsequent magnet arrangements (26) with a respective opposite polarity arrangement.

8. Device according to claim 6 or 7,
**characterised in that** the circuit (34) is adapted for selecting as characteristic positions (38a, 38b) only rising edges (38b) or only falling edges (38a) of the square wave signal (38).

9. Device according to claim 7 or claim 8, referring to claim 7,
**characterised in that** a dimension of the magnetic field portion (16) in relation to the at least one magnet arrangement (26) as the physical distance travelled along the relative movement path (R) comprises a pole pitch distance of the plurality of magnet arrangements (26).

10. Device according to one of the preceding claims,
**characterised in that** the circuit (34) is adapted for counting the occurring characteristic positions or values (38a, 38b, 40, 42, 44, 46, 48).

11. Device according to claim 10,
**characterised in that** the circuit (34) is adapted for determining a relative position between the magnetic field portion (16) and the induction portion (14) from a counting number associated to a characteristic position or value (38a, 38b, 40, 42, 44, 46, 48), taking into consideration at least one dimension of the magnetic field portion (16) relating to the at least one magnet arrangement (26).

12. Use of a linear drive or/and an eddy current brake for determining a relative speed between parts which are movable in relation to one another along a relative movement path (R): magnetic field portion (16) and induction portion (14), the linear drive or/and the eddy current brake, in particular by using the above mentioned method or/and by using the above mentioned device.

## Revendications

1. Procédé pour déterminer une vitesse relative de pièces d'un frein à courant de Foucault (12) électromagnétique mobile l'une par rapport à l'autre le long d'une voie de mouvement relatif (R), en particulier d'un moteur linéaire (12) utilisé comme frein à courant de Foucault, au moyen de ce frein à courant de Foucault (12), ledit frein à courant de Foucault (12) comprenant une portion d'induction (14) avec au moins un conducteur électrique (18) qui fait partie d'un circuit électrique qui peut être interrompu ou fermé par au moins un commutateur (22), et une portion de champ magnétique (16) mobile par rapport à la portion d'induction (14) avec au moins un arrangement d'aimants (26) pour prévoir un champ magnétique émanant de la portion de champ magnétique (16), où au frein à courant de Foucault (12) un effet d'un ralentissement peut être mis en marche ou arrêté en opérant ledit au moins un commutateur (22),
ou le procédé comprend les étapes suivantes:
- détecter un paramètre électrique induit par la portion de champ magnétique (16) dans la portion d'induction (14) pendant un intervalle de temps pendant une induction générée dans la portion d'induction (14) en raison du mouvement relatif de la portion d'induction (14) et de la portion de champ magnétique (16),
- sélecter au moins deux positions ou valeurs caractéristiques chronologiques (38a, 38b, 40, 42, 44, 46, 48) du paramètre électrique, comme par exemple des passages par zéro (42) en cas de flanc montant, des passages par zéro (40) en cas de flanc descendant, des points d'inflexion dans le flanc montant, des points d'inflexion dans le flanc descendant, des maxima locaux (44/46), des minimas locaux (48) etc.,
- pour au moins deux positions ou valeurs caractéristiques sélectées (38a1/38a2, 38b1/38b2, 40/42, 44/46, 44/48, 48/46): déterminer la distance temporelle entre ces derniers,
- pour au moins les deux positions ou valeurs caractéristiques sélectées dont la distance temporelle a été déterminée: déterminer la distance physique le long de la voie de mouvement relatif (R) parcourue par la portion de champ magnétique (16) par rapport à la portion d'induction (14) entre l'apparition desdits au moins deux positions ou valeurs caractéristiques sélectées (38a1/38a2, 38b1/38b2, 40/42, 44/46, 44/48, 48/46), et
- déterminer la vitesse relative sur la base de la distance physique déterminée et la distance temporelle déterminée entre lesdits au moins deux positions ou valeurs caractéristiques sélectées (38a1/38a2, 38b1/38b2, 40/42, 44/46, 44/48, 48/46),
- opérer le frein à courant de Foucault (12) en fonction de la vitesse relative déterminée sur la base du paramètre électrique induit pour modifier la vitesse relative.

2. Procédé selon la revendication 1,
**caractérisé en ce que**, quand le circuit électrique formé avec le conducteur (18) a été interrompu, le paramètre électrique induit détecté est la tension électrique induite, et quand le circuit électrique est fermé, le paramètre électrique induit détecté est le courant induit.

3. Dispositif pour déterminer un mouvement relatif des pièces d'un frein à courant de Foucault (12) électromagnétique mobile l'une par rapport à l'autre le long d'une voie de mouvement relatif (R), en particulier d'un moteur linéaire (12) utilisé comme frein à courant de Foucault, au moyen de ce frein à courant de Foucault (12), ledit dispositif comprenant:
- une portion d'induction (14) avec au moins un conducteur électrique (18) qui fait partie d'un circuit électrique qui peut être interrompu ou fermé par au moins un commutateur (22), et
- une portion de champ magnétique (16) mobile par rapport à la portion d'induction (14) avec au moins un arrangement d'aimants (26) pour prévoir un champ magnétique émanant de la portion de champ magnétique (16),
- un circuit électrique (34) qui est adapté pour détecter un paramètre électrique induit par la portion de champ magnétique (16) dans la portion d'induction (14) pendant un intervalle de temps pendant une induction générée dans la portion d'induction (14) en raison du mouvement relatif de la portion d'induction (14) et de la portion de champ magnétique (16),
- un dispositif de stockage (37) où au moins une dimension de la portion de champ magnétique (16) le long de la voie de mouvement relatif (R) par rapport audit au moins un arrangement d'aimants (26), comme par exemple la longueur dudit au moins un arrangement d'aimants (26), l'écart polaire etc. sont stockés,
- un dispositif de contrôle (50), adapté pour opérer le frein à courant de Foucault (12) en fonction de la vitesse relative déterminée sur la base du paramètre électrique induit pour modifier la vitesse relative,
où à cet effet au frein à courant de Foucault (12) un effet d'un ralentissement peut être mis en marche ou arrêté en opérant ledit au moins un commutateur (22),
où le circuit électrique (34) est adapté pour
sélecter au moins deux positions ou valeurs caractéristiques chronologiques (38a, 38b, 40, 42, 44, 46, 48) du paramètre électrique, comme par exemple des passages par zéro (42) en cas de flanc montant, des passages par zéro (40) en cas de flanc descendant, des points d'inflexion dans le flanc montant, des points d'inflexion dans le flanc descendant, des maxima locaux (44/46), des minimas locaux (48) etc.,
- pour au moins deux positions ou valeurs caractéristiques sélectées (38a1/38a2, 38b1/38b2, 40/42, 44/46, 44/48, 48/46) déterminer la distance temporelle entre ces derniers,
- pour lesdits au moins deux positions ou valeurs caractéristiques sélectées (38a1/38a2, 38b1/38b2, 40/42, 44/46, 44/48, 48/46) dont la distance temporelle a été déterminée, déterminer la distance physique le long de la voie de mouvement relatif (R) parcourue par la portion de champ magnétique (16) par rapport à la portion d'induction entre l'apparition desdits au moins deux positions ou valeurs caractéristiques sélectées (38a1/38a2, 38b1/38b2, 40/42, 44/46, 44/48, 48/46), et
- déterminer la vitesse relative sur la base de la distance physique déterminée et la distance temporelle déterminée entre lesdits au moins deux positions ou valeurs caractéristiques sélectées (38a1/38a2, 38b1/38b2, 40/42, 44/46, 44/48, 48/46),
où le dispositif de stockage (37) est adapté pour stocker les données des positions ou valeurs caractéristiques sélectées (38a, 38b, 40, 42, 44, 46, 48) ou/et leur apparition dans le temps ou/et leur distance temporelle ou/et de préférence une séquence chronologique (36, 38) du paramètre électrique détecté.

4. Dispositif selon la revendication 3,
**caractérisé en ce que**, quand le circuit électrique formé avec le conducteur électrique (18) est interrompu, le paramètre électrique induit détecté est la tension électrique induite, et quand le circuit électrique est fermé, le paramètre électrique induit détecté est le courant induit.

5. Dispositif selon les revendications 3 ou 4,
**caractérisé en ce que** le circuit (34) est adapté pour transformer le paramètre électrique détecté en un signal rectangulaire (38).

6. Dispositif selon la revendication 5,
**caractérisé en ce que** le circuit (34) est adapté pour sélecter des flancs (38a, 38b) du signal rectangulaire (38) comme des positions caractéristiques (38a, 38b).

7. Dispositif selon une des revendications précédentes 3 à 6,
**caractérisé en ce que** la portion de champ magnétique (16) comprend le long de la voie de mouvement relatif (R) une pluralité d'arrangements d'aimants (26) successifs avec respectivement un agencement de polarité opposé.

8. Dispositif selon les revendications 6 ou 7,
**caractérisé en ce que** le circuit (34) est adapté pour sélecter seulement des flancs montants (38b) ou seulement des flancs descendants (38a) du signal rectangulaire (38) comme des positions caractéristiques (38a, 38b).

9. Dispositif selon la revendication 7 ou la revendication 8, se référant à la revendication 7,
**caractérisé en ce qu'**une dimension de la portion de champ magnétique (16) par rapport audit au moins un arrangement d'aimants (26) comme distance physique parcourue le long de la voie de mouvement relatif (R) comprend un écart polaire de la pluralité d'arrangements d'aimants (26).

10. Dispositif selon une des revendications précédentes,
**caractérisé en ce que** le circuit (34) est adapté pour compter les positions ou valeurs caractéristiques (38a, 38b, 40, 42, 44, 46, 48) présentes.

11. Dispositif selon la revendication 10,
**caractérisé en ce que** le circuit (34) est adapté pour déterminer une position relative entre la portion de champ magnétique (16) et la portion d'induction (14) sur la base d'un nombre associé à une position ou valeur caractéristique (38a, 38b, 40, 42, 44, 46, 48), en considérant au moins une dimension e la portion de champ magnétique (16) par rapport audit au moins un arrangement d'aimants (26).

12. Utilisation d'un entraînement linéaire ou/et d'un frein à courant de Foucault (12) pour déterminer une vitesse relative entre des pièces mobiles l'une par rapport à l'autre le long d'une voie de mouvement relatif (R): la portion de champ magnétique (16) et la portion d'induction (14), l'entraînement linéaire ou/et le frein à courant de Foucault (12), en particulier en utilisant le procédé susmentionné ou/et en utilisant le dispositif susmentionné.
